# EUROPÄISCHE PATENTSCHRIFT

(11) **EP 0 537 651 B1**
(45) Veröffentlichungstag und Bekanntmachung des Hinweises auf die Patenterteilung: **24.04.1996**
(21) Anmeldenummer: 92117351.4
(22) Anmeldetag: 10.10.1992
(51) Int. Cl.: H05B 37/03, H02J 9/02

(54) **Steuerungs- und Überwachungseinrichtung für eine Notleuchte**
Controlling and monitoring device for a safety-lighting unit
Dispositif de commande et de surveillance d'un éclairage de secours

(30) Priorität: 17.10.1991 DE 4134298
(43) Veröffentlichungstag der Anmeldung: 21.04.1993
(73) Patentinhaber: ABB PATENT GmbH, D-68309 Mannheim (DE)
(72) Erfinder: Prasuhn, Jürgen, W-4770 Soest (DE)
(74) Vertreter: Grünecker, Kinkeldey, Stockmair & Schwanhäusser Anwaltssozietät

(56) Entgegenhaltungen:
- FR-A- 2 622 749
- Understanding Electronic Control Systems, Texas Instruments Incorporated, Dallas, Texas, USA, Seiten 10-10 bis 10-11

## Beschreibung

Die Erfindung bezieht sich auf eine Steuerungs- und Überwachungseinrichtung für eine Notleuchte, die als autarke Batterie-Notleuchte oder in einem Notlichtsystem in Verbindung mit einer Unter- oder Zentralstation betrieben werden kann, wobei die Steuerungs- und Überwachungseinrichtung einen Mikroprozessor zur programmgesteuerten Durchführung von Steuerungs- und Überwachungsfunktionen enthält, und einen Festspeicher und ein programmierbarer Speicher vorhanden sind, auf die der Mikroprozessor zugreifen kann.

Eine solche Einrichtung ist als Teil eines Notbeleuchtungssystems bekannt, das in der FR-A-2 622749 bzw. der korrespondierenden DE-A1-38 36 644 beschrieben ist. Im Festspeicher der bekannten Einrichtung sind Zustandsparameter von Stromkreis-Blökken als Sollwerte gespeichert. Im programmierbaren Speicher sind Meßwerte aus den Stromkreis-Blöcken speicherbar. Der Mikroprozessor kann durch Vergleich der in den beiden Speichern enthaltenen Daten Diagnosefunktionen ausführen. Soweit das Notbeleuchtungssystem von einer zentralen Steuereinheit aus gesteuert wird, können gespeicherte Betriebsweisen gewählt werden. Eine Möglichkeit zur Änderung oder Ergänzung gespeicherter Funktionen und Parameter ist nicht vorgesehen.

Aus der Druckschrift ABB CEAG Katalog Einzelbatterie-Systeme gemäß VDE 0108 von 10/89 ist ein Notlichtsystem bekannt, das sogenannte Einzelbatterie-Notleuchten enthält, die autark oder in Verbindung mit einer Unterstation arbeiten können. Die bekannte Not- oder Sicherheitsleuchte wird als Einzelbatterieleuchte bezeichnet, weil sie eine eigene Batterie für den Notbetrieb enthält, also nicht aus einer Sammelbatterie gespeist wird. Da sich die Erfindung allgemein auf die Steuerungseinrichtung einer Notleuchte bezieht, ist sie jedoch nicht auf eine bestimmte Art der Stromversorgung der Leuchte beschränkt.

Die bekannte Einzelbatterie-Notleuchte enthält eine Steuerungsund Überwachungseinrichtung, mit deren Hilfe z.B. die nach VDE 0108 vorgesehenen wöchentlichen Funktionstest und jährlichen Betriebsdauertests, sowie eine Überwachung der Ladeeinrichtung und des Leuchtmittels programmgesteuert durchgeführt werden können. Diese Funktionen werden von einem maskenprogrammierten Mikroprozessor gesteuert. Zur Steuerungs- und Überwachungseinrichtung gehört auch ein Interface, mit dessen Hilfe der Mikroprozessor über eine Datenleitung Informationen mit einer zentralen Überwachungsstation austauschen kann. Es besteht dadurch die Möglichkeit, Betriebszustände der einzelnen an die Überwachungsstation angeschlossenen Leuchten an einem zentralen Ort anzuzeigen. An diesem Ort läßt sich auch ein Funktions- oder Betriebsdauertest auslösen und das Testergebnis anzeigen.

Alle Funktionen, die die Notleuchte autark oder in Verbindung mit einer Zentral- oder Unterstation ausführen können soll, müssen in der Entwicklungsphase des Systems festgelegt werden. Software-Änderungen, die aufgrund kundenspezifischer Vorgaben zu irgendeinem späteren Zeitpunkt erforderlich werden, können nur insoweit berücksichtigt werden, als sie sich auf die Unterstation, die mit einem EPROM als Programmspeicher ausgerüstet ist, beziehen. Eine Änderung der Funktion der Steuerungseinrichtung der Leuchte ist praktisch aus Kosten- und Zeitgründen nicht möglich, da sie einen neuen maskenprogrammierten Mikroprozessor erforderlich machen würde.

Davon ausgehend liegt der Erfindung die Aufgabe zugrunde, eine Steuerungseinrichtung für Notleuchten anzugeben, die eine verbesserte Anpassungsfähigkeit und nachträgliche Änderbarkeit aufweist.

Diese Aufgabe wird gelöst durch eine Steuerungs- und Überwachungseinrichtung für eine Notleuchte, die als autarke Batterie-Notleuchte oder in einem Notlichtsystem in Verbindung mit einer Unter- oder Zentralstation betrieben werden kann, wobei die Steuerungs- und Überwachungseinrichtung einen Mikroprozessor zur programmgesteuerten Durchführung von Steuerungs- und Überwachungsfunktionen enthält, und einen Festspeicher und ein programmierbarer Speicher vorhanden sind, auf die der Mikroprozessor zugreifen kann, und wobei
a) ein anwendungsspezifischer Schaltkreis vorhanden ist, der zumindest mehrere für die Notleuchtensteuerung benötigte elektronische Grundfunktionen, wie Treiberstufen, A/D-Wandler, Umschalteinrichtungen, Taktgeber, Modulatoren und Schnittstelleneinrichtungen enthält,
b) im Festspeicher mit wahlfreiem Zugriff Dienstprogramme gespeichert sind, zu denen Mindest- oder Standardfunktionen zur Notleuchtensteuerung und Überwachung sowie Ladeprogramme für zusätzliche Steuerungsfunktionen zählen, und
c) als programmierbarer Speicher ein nichtflüchtiger, löschund programmierbarer Speicher, insbesondere ein EEPROM, vorhanden ist, in dem zusätzliche, im speziellen Anwendungsfall benötigte Steuerungs- und Überwachungsfunktionen speicherbar sind, die zu einem beliebigen Zeitpunkt ergänzt oder geändert werden können.

Die mit der Erfindung vorgeschlagene Aufteilung der Gesamtfunktion der Steuerungs- und Überwachungseinrichtung einer Notleuchte in einen anwendungsspezifischen Schaltkreis, einen Mikroprozessor, einen Festspeicher und einen lösch- und programmierbaren Speicher hat den Vorteil, daß eine Reihe von Grund- und Zusatzfunktionen in einen anwendungsspezifischen Schaltkreis kostengünstig realisiert werden können. Diese Funktionen können durch einen Mikroprozessor gesteuert aktiviert werden, wobei Standard-Steuerfunktionen in einem ROM gespeichert sind. Die wünschenswerte Anpassungs- und Änderungsfähigkeit wird durch den zusätzlichen lösch- und programmierbaren Speicher, z.B. ein EEPROM erreicht. Da Standard-Funktionen im Festspeicher gespeichert sind, muß der lösch- und programmierbare Speicher bei der Auslieferung nicht unbedingt programmiert sein, so daß eine sogenannte Low Cost Version möglich ist, die trotzdem die Option enthält, zu einem späteren Zeitpunkt zusätzliche Funktionen zu implementieren, parametrisieren oder zu aktivieren.

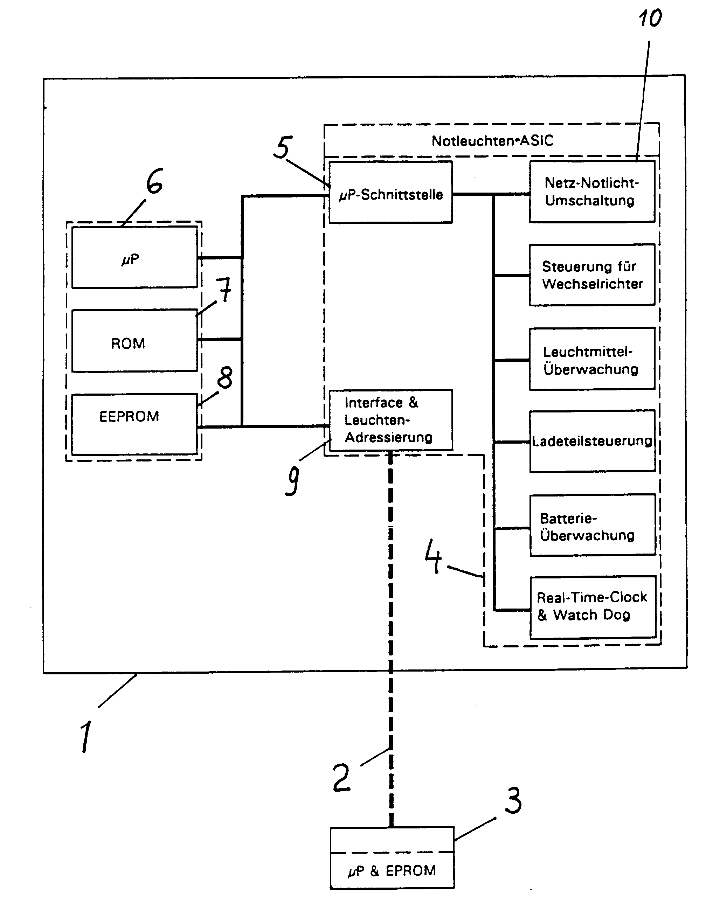

Weitere Vorteile und Ausgestaltungsmöglichkeiten ergeben sich aus der nachstehenden Beschreibung eines Ausführungsbeispiels, das anhand der Zeichnung erläutert wird.

In der Zeichnung ist das Blockschema einer Steuerungs- und Überwachungseinrichtung 1 für eine Notleuchte dargestellt, die über eine Datenleitung 2 mit einer Unterstation 3 verbunden ist. Die Steuerungs- und Überwachungseinrichtung 1 enthält einen anwendungsspezifischen Schaltkreis 4, also einen sogenannten ASIC, der über eine Mikroprozessor-Schnittstelle 5 mit einem Mikroprozessor 6, einem Festspeicher 7 und einem lösch- und programmierbaren Speicher 8 verbunden ist.

Im dargestellten Beispiel ist mit gestrichelten Linien angedeutet, daß die Komponenten 6 bis 8 in einem Halbleiterbaustein integriert sein können. Es kann sich jedoch auch um einzelne Bausteine handeln. Die Komponenten 6 bis 8 können auch im anwendungsspezifischen Schaltkreis enthalten sein. Der anwendungsspezifische Schaltkreis 4 verfügt über eine Interface-Schaltung 9 zur Verbindung der Steuer- und Überwachungseinrichtung 1 mit der Datenleitung 2. Die Interface-Schaltung 9 kann auch Einrichtungen zur Leuchtenadressierung enthalten. Der anwendungsspezifische Schaltkreis 4 kann mehrere Funktionseinheiten enthalten, wie z.B. eine Netz-Notlicht-Umschaltung, eine Steuereinrichtung für einen Wechselrichter, eine Leuchtmittel-Überwachung, eine Ladeteilsteuerung, eine Batterieüberwachung und Taktgeber sowie Watch-dog-Einrichtungen.

Als Festspeicher 7 wird vorzugsweise ein ROM und als lösch- und programmierbarer Speicher 8 ein EEPROM verwendet. Es ist auch möglich, ein OTP (One Time Programmable ROM) anstelle eines ROM's einzusetzen. Ein OTP kann zwar auch anstelle eines EEPROMs als Speicher 8 verwendet werden, wobei jedoch nur ein einmaliger Programmiervorgang möglich ist, also die mit der Erfindung angestrebten Vorteile nicht im vollen Umfang erreicht werden.

## Patentansprüche

1. Steuerungs- und Überwachungseinrichtung für eine Notleuchte, die als autarke Batterie-Notleuchte oder in einem Notlichtsystem in Verbindung mit einer Unter- oder Zentralstation betrieben werden kann, wobei die Steuerungs- und Überwachungseinrichtung einen Mikroprozessor (6) zur programmgesteuerten Durchführung von Steuerungs- und Überwachungsfunktionen enthält, und ein Festspeicher (7) und ein programmierbarer Speicher (8) vorhanden sind, auf die der Mikroprozessor (6) zugreifen kann, dadurch gekennzeichnet, daß
a) ein anwendungsspezifischer Schaltkreis (4) vorhanden ist, der zumindest mehrere für die Notleuchtensteuerung benötigte elektronische Grundfunktionen, wie Treiberstufen, A/D-Wandler, Umschalteinrichtungen, Taktgeber, Modulatoren und Schnittstelleneinrichtungen enthält,
b) im Festspeicher mit wahlfreiem Zugriff (7) Dienstprogramme gespeichert sind, zu denen Mindest- oder Standardfunktionen zur Notleuchtensteuerung und Überwachung sowie Ladeprogramme für zusätzliche Steuerungsfunktionen zählen, und
c) als programmierbarer Speicher (8) ein nichtflüchtiger, lösch- und programmierbarer Speicher, insbesondere ein EEPROM, vorhanden ist, in dem zusätzliche, im speziellen Anwendungsfall benötigte Steuerungs- und Überwachungsfunktionen speicherbar sind, die zu einem beliebigen Zeitpunkt ergänzt oder geändert werden können.

2. Steuerungs- und Überwachungseinrichtung nach Anspruch 1, dadurch gekennzeichnet, daß im anwendungsspezifischen Schaltkreis die Funktionen weiterer Komponenten integriert sind, ausgewählt aus den Funktionen des Mikroprozessors (6), des Festspeichers (7) und des nichtflüchtigen lösch- und programmierbaren Speichers (8), so daß in der höchsten Integrationsstufe alle Funktionen der Steuerungs- und Überwachugnseinrichtung in einem Baustein integriert sind.

3. Steuerungs- und Überwachungseinrichtung nach Anspruch 1 oder 2, dadurch gekennzeichnet, daß eine der Schnittstelleneinrichtungen des anwendungsspezifischen Schaltkreises (4) für den Anschluß einer Unterstation (3) über eine Datenleitung (2) eingerichtet ist.

## Claims

1. Controlling and monitoring device for a safety-lighting unit which can be operated as an autonomous battery-operated emergency lighting unit or in an emergency lighting system in conjunction with a substation or master station, the controlling and monitoring device containing a microprocessor (6) for program-controlled execution of controlling and monitoring functions, and a read-only memory (7) and a programmable memory (8) which the microprocessor (6) can access being present, characterized in that
a) an application-specific circuit (4) is present which contains at least a plurality of basic electronic functions, such as driver stages, analog-digital converters, change-over devices, clock transmitters, modulators and interface devices, required for controlling the emergency lighting unit,
b) service programs which include minimum or standard functions for controlling emergency lighting units and monitoring as well as loading programs for additional controlling functions are stored in the read-only memory with random access (7), and
c) a non-volatile erasable and programmable memory, in particular a EEPROM, in which additional controlling and monitoring functions which are required in the specific application and can be supplemented or changed at any desired point can be stored is present as programmable memory (8).

2. Controlling and monitoring device according to Claim 1, characterized in that the functions of further components, selected from the functions of the microprocessor (6), the read-only memory (7) and the non-volatile erasable and programmable memory (8), are integrated in the application-specific circuit so that in the highest integration stage all the functions of the controlling and monitoring device are integrated in one module.

3. Controlling and monitoring device according to Claim 1 or 2, characterized in that one of the interface devices of the application-specific circuit (4) is designed for the connection of a substation (3) via a data line (2).

## Revendications

1. Dispositif de commande et de surveillance pour un appareil d'éclairage de secours susceptible de fonctionner en tant qu'appareil d'éclairage de secours à batterie autonome ou dans un système d'éclairage de secours en combinaison avec une sous-station ou station centrale, le dispositif de commande et de surveillance comprenant un microprocesseur (6) pour l'exécution programmée de fonctions de commande et de surveillance, ainsi qu'une mémoire morte (7) et une mémoire programmable (8) auxquelles le microprocesseur peut avoir accès,
*caractérisé par le fait que*
a) il est prévu un circuit (4) spécifique en fonction de l'utilisation, qui contient au moins plusieurs fonctions de base électroniques nécessaires pour la commande d'appareils d'éclairage de secours telles que étages d'attaque, convertisseurs analogiques/numériques, dispositifs de commutation, horloges, modulateurs et dispositifs d'interface,
b) dans la mémoire morte à accès aléatoire (7) sont mémorisés des programmes de service comprenant des fonctions minimales ou standard pour la commande d'appareils d'éclairage de secours et la surveillance ainsi que des programmes de chargement pour des fonctions de commande supplémentaires, et
c) la mémoire programmable (8) est constituée par une mémoire non volatile, effaçable et programmable, en particulier une mémoire EEPROM, dans laquelle peuvent être mémorisées des fonctions supplémentaires de commande et de surveillance qui sont nécessaires dans le cas d'utilisations spéciales et qui peuvent être complétées ou modifiées à tout moment.

2. Dispositif de commande et de surveillance suivant la revendication 1, caractérisé par le fait que dans le circuit spécifique en fonction de l'utilisation sont intégrées les fonctions d'autres composants sélectionnées parmi les fonctions du microprocesseur (6), de la mémoire morte (7) et de la mémoire (8) non volatile effaçable et programmable, de sorte que toutes les fonctions du dispositif de commande et de surveillance sont intégrées dans un module à l'étage d'intégration le plus élevé.

3. Dispositif de commande et de surveillance suivant la revendication 1 ou 2, caractérisé par le fait que l'un des dispositifs d'interface du circuit (4) spécifique en fonction de l'utilisation est conçu pour le raccordement d'une sous-station (3) en passant par une ligne de données (2).
